# EUROPEAN PATENT APPLICATION

(11) **EP 4 212 600 A1**
(43) Date of publication of application: **19.07.2023**
(21) Application number: 23152310.1
(22) Date of filing: 18.01.2023
(51) Int. Cl.: C09J 7/10, C09J 7/38, C09J 9/00, C09J 11/04, C09J 11/06, H01M 50/00, C08K 9/06

(54) **THERMAL CONDUCTIVE ACRYLIC SHEET, METHOD FOR MANUFACTURING THE SAME, AND BATTERY MODULE COMPRISING THE SAME**

(30) Priority: 18.01.2022 KR 20220007079
(71) Applicant: SK microworks solutions Co., Ltd., Cheonan-si Chungcheongnam-do 31044 (KR)
(72) Inventor: YOO, Kwang-Hyeon, 31044 Cheonan-si, Chungcheongnam-do (KR)
(74) Representative: Dehns

(57) **Abstract**

A thermally conductive acrylic sheet is prepared from a thermally conductive acrylic composition comprising an acrylic resin, a tackifying resin of a certain composition, an organic filler, and a photoinitiator. The thermally conductive acrylic sheet can have high adhesive strength with excellent thermal conductivity, and can be advantageously applied to various fields that require heat dissipation characteristics.

## Description

### Technical Field

The invention relates to a thermally conductive acrylic sheet capable of exhibiting high adhesive strength while having excellent thermal conductivity and elastic restoring force, to a process for preparing the same, and to a battery module comprising the same.

### Background Art

In order to achieve high performance of devices in the optical, electrical, and electronic fields, the components mounted inside the device are being made to have a large capacity and high integration. Due to the high capacity and high integration of the components, a lot of heat is generated in the driving process of the device. In such an event, if the generated heat is not discharged to the outside, problems such as malfunction of the device and degradation of the substrate may take place; thus, it is necessary to adopt a heat dissipation structure in the device so that the heat generated in the device is smoothly discharged to the outside.

In particular, in an electric vehicle as an example of the device, the reliability and stability of a battery system are the most important factors that determine its commercial value. For stable operation of the battery system, it is necessary to smoothly discharged heat generated during the charging and discharging of cells in the battery module to the outside.

Accordingly, in order to enhance the heat dissipation characteristics of a battery system, a thermally conductive sheet or a heat dissipation plate attached by a thermally conductive sheet has been conventionally applied to a battery module (see Patent Document 1). The thermally conductive sheet applied to a battery module needs to have high adhesive strength so as to maintain a state coupled to the battery module for a long period of time while having thermal conductivity.

However, the thermally conductive sheets in the prior art have a limit in securing adhesive strength to a required level while increasing their thermal conductivity. That is, in order to increase the thermal conductivity of a thermally conductive sheet, the content of a thermally conductive filler should be relatively high. In such an event, if the thermally conductive filler is contained in a high content, the content of a binder resin for obtaining adhesive strength is relatively reduced, making it difficult to obtain high adhesive strength. Here, a binder resin in which a monomer with a low molecular weight has been crosslinked has been adopted in order to increase the adhesive strength of a thermally conductive sheet, which causes a problem in that the crosslinking density of the binder resin is low, thereby reducing the environmental resistance, thermal resistance, and elastic restoring force of the thermally conductive sheet.

### [Prior Art Document]

(Patent Document 1) Korean Laid-open Patent Publication No. 2017-0140693

### Disclosure of Invention

### Technical Problem

In order to solve the above-mentioned problems in the art, the present inventors have conducted various studies. As a result, it has been discovered that a thermally conductive acrylic sheet prepared from a thermally conductive acrylic composition containing a tackifying resin of a specific composition can have high adhesive strength while securing thermal conductivity and elastic restoring force.

Thus, an object of the invention is to provide a thermally conductive acrylic sheet capable of exhibiting high adhesive strength while having excellent thermal conductivity and elastic restoring force and a process for preparing the same.

In addition, another object of the invention is to provide a battery module with enhanced heat dissipation characteristics through the thermally conductive acrylic sheet.

### Solution to Problem

According to an embodiment to accomplish the above object, there is provided a thermally conductive acrylic sheet, which is prepared from a thermally conductive acrylic composition comprising an acrylic resin, a tackifying resin, an inorganic filler, and a photoinitiator, wherein the tackifying resin comprises a hydrogenated rosin ester, and the adhesive strength of the thermally conductive acrylic sheet is 1 kgf/cm or more. Optionally, the adhesive strength of the thermally conductive acrylic sheet is 1 kgf/cm.

According to another embodiment, there is provided a process for preparing a thermally conductive acrylic sheet, which comprises coating an inorganic filler raw material with a silane coupling agent and pulverizing it to prepare an inorganic filler; preparing a resin mixture in which an acrylic resin and a tackifying resin are mixed; mixing the inorganic filler and the resin mixture to prepare a dispersion; mixing an anti-settling agent with the dispersion to prepare a dispersion crude liquid; mixing a photoinitiator with the dispersion crude liquid to prepare a thermally conductive acrylic composition; and coating the thermally conductive acrylic composition on a release film and photocuring it.

According to still another embodiment, there is provided a battery module, which comprises a housing; a battery cell; and the thermally conductive acrylic sheet.

### Advantageous Effects of Invention

Since the thermally conductive acrylic sheet according to the embodiment is prepared from a thermally conductive acrylic composition containing a tackifying resin of a specific composition, it can have high adhesive strength.

In addition, since the thermally conductive acrylic sheet according to the embodiment is prepared from a thermally conductive acrylic composition containing an inorganic filler in a high content, it can have high thermal conductivity.

In addition, since the thermally conductive acrylic sheet according to the embodiment is prepared from a solvent-free thermally conductive acrylic composition that does not contain a solvent, it can have a high crosslinking density, whereby it can have excellent environmental resistance and thermal resistance, along with various thickness ranges.

Accordingly, the thermally conductive acrylic sheet according to the embodiment can be advantageously applied to various optical, electrical, and electronic devices that require heat dissipation characteristics. In particular, the thermally conductive acrylic sheet according to the embodiment may be applied to a battery module (e.g., a battery module for a vehicle) to increase the heat dissipation characteristics of the battery module.

### Brief Description of Drawing

Fig. 1 is a cross-sectional view showing a thermally conductive acrylic sheet according to an embodiment.
Fig. 2 is a flow diagram showing a process for preparing a thermally conductive acrylic sheet according to an embodiment.
Fig. 3 is a cross-sectional view showing a battery module to which a thermally conductive acrylic sheet according to an embodiment is applied.
Fig. 4 shows the results of DSC analysis of the thermally conductive acrylic sheet according to Test Example 4.

### <Explanation of Reference Numerals>

100: battery module
101: housing
102: battery cell
103: thermally conductive acrylic sheet
104: cushioning pad
105: cooling fin

### Best Mode for Carrying out the Invention

Hereinafter, the present invention will be described with reference to embodiments. Here, the embodiments are not limited to those described below. Rather, they can be modified into various forms as long as the gist of the invention is not altered.

In the present specification, a description that one component is formed above/under another component or is connected or coupled to each other covers what is directly, or indirectly through another component, formed, connected, or coupled between these components. In addition, it should be understood that the reference for the above/under position of each component may vary depending on the direction in which the object is observed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

The terms first, second, and the like are used herein to describe various elements, and the elements should not be limited by the terms. The terms are used for the purpose of distinguishing one element from another.

### Thermally conductive acrylic sheet

In an embodiment, there is provided a thermally conductive acrylic sheet prepared by using a thermally conductive acrylic composition that is typically solvent-free and comprises a tackifying resin of a specific composition. Specifically, the thermally conductive acrylic sheet according to an embodiment of the present invention is prepared from a thermally conductive acrylic composition comprising an acrylic resin, a tackifying resin, an inorganic filler, and a photoinitiator, which will be described as follows.

### (a) Acrylic resin

The acrylic resin according to an embodiment of the present invention may be a polymer obtained by polymerization of one or more monomers of monofunctional (meth)acrylate and multifunctional (meth)acrylate. In the description of monofunctional (meth)acrylate and multifunctional (meth)acrylate, the term "(meth)acrylate" may refer to "acrylate" and/or "methacrylate."

The monofunctional (meth)acrylate may specifically be an alkyl (meth)acrylate having a straight or branched alkyl group. The alkyl (meth)acrylate may specifically be methyl (meth)acrylate, ethyl (meth)acrylate, n-propyl (meth)acrylate, isopropyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, n-stearyl (meth)acrylate, isostearyl (meth)acrylate, n-lauryl (meth)acrylate, or the like. They may be used alone or in combination of two or more thereof.

The multifunctional (meth)acrylate may be a (meth)acrylate having two or more functional groups. Specifically, the multifunctional (meth)acrylate may be a bifunctional (meth)acrylate such as 1,3-butanediol di(meth)acrylate, 1,4-butanediol di(meth)acrylate, neopentanediol di(meth)acrylate, 1,6-hexanediol di(meth)acrylate, 1,9-nonanediol di(meth)acrylate, ethylene glycol di(meth)acrylate, polyethylene glycol di(meth)acrylate, propylene glycol di(meth)acrylate, tripropylene glycol di(meth)acrylate, and polypropylene glycol di(meth)acrylate; or trifunctional or higher-functional (meth)acrylate such as trimethylolpropane tri(meth)acrylate, pentaerythritol tri(meth)acrylate, tris(acryloyloxyethyl) isocyanurate, ditrimethylol propane tetra(meth)acrylate, pentaerythritol tetra(meth)acrylate, dipentaerythritol monohydroxy penta(meth)acrylate, and dipentaerythritol hexa(meth)acrylate. They may be used alone or in combination of two or more thereof.

The method for preparing an acrylic resin as a polymer by polymerization of at least one of the monofunctional (meth)acrylate and the multifunctional (meth)acrylate is not particularly limited. Specifically, it may be bulk polymerization, solution polymerization, suspension polymerization, emulsion polymerization, or the like.

In addition, the polymerization initiator used in the process of polymerizing at least one of the monofunctional (meth)acrylate and multifunctional (meth)acrylate is not particularly limited as well. Specifically, it may be an initiator activated by heat or an initiator activated by light. Specifically, the polymerization initiator may be an azo compound (e.g., azobis(isobutyronitrile)), a peroxide compound (e.g., benzoyl peroxide), benzophenone, benzoinethyl ether, 2,2'-dimethoxy-2-phenylacetophenone, or a mixture thereof.

In the preparation of an acrylic resin by polymerizing a monomer such as the monofunctional (meth)acrylate and/or the multifunctional (meth)acrylate, the acrylic resin according to an embodiment of the present invention may be an acrylic resin that has a conversion rate of 99% or more (specifically, 100%) from the monomer to the acrylic resin. As a thermally conductive acrylic sheet is prepared (or formed) from a thermally conductive acrylic composition comprising such an acrylic resin having a high conversion rate, the embodiment of the present invention can provide a thermally conductive acrylic sheet having excellent environmental resistance, thermal resistance, and the like.

Meanwhile, the acrylic resin may have a glass transition temperature (Tg) of -50 to -40°C, -48 to -38°C, or -45 to -35°C. As the glass transition temperature of the acrylic resin is within the above range, it is possible to prevent the adhesive strength of the thermally conductive acrylic sheet from being reduced while securing the permanent compression set (elastic restoring force) of the thermally conductive acrylic sheet at a required level.

In addition, the acrylic resin may have a viscosity of 400 to 600 cps, 450 to 550 cps, or 400 to 500 cps. As the viscosity of the acrylic resin is within the above range, the coatability of the thermally conductive acrylic composition is secured, whereby it is possible to prevent the entrainment of air bubbles and to readily prepare a thermally conductive acrylic sheet having various thickness ranges.

Since the acrylic resin according to an embodiment of the present invention has a relatively low molecular weight (e.g., 60 to 1,500 g/mole or 70 to 300 g/mole) and is an acrylic resin in which a large amount of polar groups are present, it may have high solubility (compatibility) with a tackifying resin to be described below. Specifically, since the acrylic resin has a large amount of polar groups, when cured to a thickness of 30 µm, its adhesive force (adhesive force of the cured film) may be 1.5 kgf/in or more. As a thermally conductive acrylic sheet is prepared (or formed) from a thermally conductive acrylic composition comprising such an acrylic resin, the embodiment of the present invention can provide a thermally conductive acrylic sheet having high adhesive strength.

The content of the acrylic resin may be 10 to 20% by weight, 12 to 18% by weight, 13 to 16% by weight, or 14 to 15% by weight, based on the total weight (a+b+c) of the acrylic resin (a), a tackifying resin (b), and an inorganic filler (c). As the content of the acrylic resin is within the above range, the thermally conductive acrylic sheet may have high adhesive strength while securing thermal conductivity and elastic restoring force of the thermally conductive acrylic sheet.

### (b) Tackifying resin

The tackifying resin according to an embodiment of the present invention is for increasing the adhesive strength of the thermally conductive acrylic sheet and comprises one or more or two or more hydrogenated rosin esters. Specifically, the tackifying resin may comprise a first hydrogenated rosin ester and a second hydrogenated rosin ester having an acid value different from that of the first hydrogenated rosin ester. As the hydrogenated rosin ester comprises two or more types of hydrogenated rosin esters having different acid values, the adhesive characteristics of the tackifying resin comprising the hydrogenated rosin ester are optimized, thereby achieving a thermally conductive acrylic sheet having high adhesive strength.

Specifically, the hydrogenated rosin ester contained in the tackifying resin may be obtained through a modification (denaturation) reaction of a rosin ester using water or hydrogen. Such a hydrogenated rosin ester may comprise a compound having no unsaturated bond (or double bond), comprising two or more bonded 6-membered ring structures, and having one or more functional groups. As the hydrogenated rosin ester comprises the above compound, the tackifying resin comprising the hydrogenated rosin ester does not exhibit reactivity (radical reaction) with a photoinitiator during the curing reaction of the acrylic resin by the photoinitiator, which will be described later, it is possible to increase the curing reactivity of the acrylic resin. Thus, as a tackifying resin comprising the hydrogenated rosin ester is mixed with an acrylic resin to prepare a thermally conductive acrylic sheet, the adhesive strength of the thermally conductive acrylic sheet can be maximized.

The compound contained in the hydrogenated rosin ester may be a compound represented by the following Formula 1.

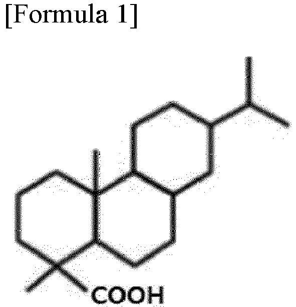

The one or more or two or more hydrogenated rosin esters may have an acid value of 2 to 20 mg KOH/g and a softening point of 80 to 110°C. As the acid value and softening point of the hydrogenated rosin ester are within the above ranges, the adhesive strength of the thermally conductive acrylic sheet may be increased.

Specifically, the hydrogenated rosin ester may comprise a first hydrogenated rosin ester having an acid value of 2 to 10 mg KOH/g and a second hydrogenated rosin ester having an acid value of 11 to 20 mg KOH/g. As the hydrogenated rosin ester comprises a first hydrogenated rosin ester and a second hydrogenated rosin ester each having an acid value within the above range, the hydrogenated rosin ester comprises a first hydrogenated rosin ester that is soft and sticky and a second hydrogenated rosin ester that is hard and sticky. Thus, the adhesive characteristics of the tackifying resin comprising the hydrogenated rosin ester are optimized, thereby achieving a thermally conductive acrylic sheet having high adhesive strength. In addition, as the hydrogenated rosin ester comprises two types of hydrogenated rosin esters each having an acid value within the above range, the ratio of functional groups (e.g., COOH, OH, etc.) involved in adhesive strength is higher than the case where one type of hydrogenated rosin ester is employed, so that the adhesive strength of the thermally conductive acrylic sheet can be increased.

Here, the mixing ratio of the first hydrogenated rosin ester and the second hydrogenated rosin ester may be a weight ratio of 1:0.5 to 1:4, 1:1 to 1:2, 1:1 to 1: 1.5, or 1: 1 to 1:1.3 when the adhesive strength of the thermally conductive acrylic sheet is taken into account. As the mixing ratio between the first and second hydrogenated rosin esters is within the above range, the adhesive strength of the thermally conductive acrylic sheet can be maximized.

The content of the tackifying resin comprising the hydrogenated rosin ester may be 3 to 30% by weight, 5 to 25% by weight, 7 to 23% by weight, or 10 to 20% by weight, based on the total weight (a+b) of the acrylic resin (a) and the tackifying resin (b). As the content of the tackifying resin is within the above range, it is possible to prevent excessively high hardness of the thermally conductive acrylic sheet or aggregation of the tackifying resin while the adhesive strength of the thermally conductive acrylic sheet is increased.

### (c) Inorganic filler

The inorganic filler according to an embodiment of the present invention is for increasing the thermal conductivity and mechanical strength of the thermally conductive acrylic sheet. Specifically, it may be a powder comprising at least one selected from the group consisting of magnesium oxide, aluminum oxide, aluminum nitride, boron nitride, silicon carbide, magnesium carbonate, and silicon dioxide. The powder may be composed of particles having various shapes such as a spherical shape, a cube shape, a rectangular parallelepiped shape, a cylindrical shape, a plate shape, an irregular shape, and the like.

Such an inorganic filler may be surface-modified (coated) with a silane coupling agent, thereby increasing the adhesive strength of the thermally conductive acrylic sheet. That is, a plurality of hydroxyl groups (OH) are present on the surface of the powder as the inorganic filler raw material, which may act as a factor to lower the adhesive strength of the thermally conductive acrylic sheet by holding the polar groups of the acrylic resin. Accordingly, in an embodiment of the present invention, an inorganic filler in which a plurality of hydroxyl groups (OH) present on the surface have been minimized is used by surface modification (treatment) with a silane coupling agent, which can prevent the adhesive strength of the thermally conductive acrylic sheet from being lowered by the hydroxyl groups (OH) present on the surface of the inorganic filler raw material.

The silane coupling agent is not particularly limited as long as it is commonly known. Specifically, it may be a silane coupling agent having an amino group, a silane coupling agent having a vinyl group, a silane coupling agent having an alkyl group, or the like.

The silane coupling agent having an amino group may specifically be at least one selected from the group consisting of N-(2-aminoethyl)-3-aminopropylmethyldimethoxysilane, N-(2-aminoethyl)-3-aminopropyltrimethoxysilane, N-(2-aminoethyl)-3 -aminopropyltriethoxysilane, 3-aminopropyltrimethoxysilane, 3-aminopropyltriethoxysilane, 3-triethoxysilyl-N-(1,3 -dimethylbutylidene)propylamine, N-phenyl-3 -aminopropyltrimethoxysilane, N-(vinylbenzyl)-2-aminoethyl-3-aminopropyltrimethoxysilane, 3-glycidoxypropyltrimethoxysilane, 3-glycidoxypropyltridimethoxysilane, and 3-glycidoxypropylmethyldiethoxysilane.

The silane coupling agent having a vinyl group may specifically be at least one selected from the group consisting of vinyltrimethoxysilane, vinyltriethoxysilane, and vinyltriisopropoxysilane.

The silane coupling agent having an alkyl group may specifically be at least one selected from the group consisting of hexyltrimethoxysilane, hexyltriethoxysilane, decyltriethoxysilane, decylmethyldiethoxysilane, and octadecyltriepoxysilane.

The amount of the silane coupling agent used may be 0.5 to 1% by weight based on the total weight of the inorganic filler. As the amount of the silane coupling agent used is within the above range, it is possible to reduce the number of hydroxyl groups (OH) present on the surface of the inorganic filler to a required level and to prevent the inorganic filler from aggregating with each other during the surface treatment.

The content of the inorganic filler may be 83% by weight or more, 83 to 90% by weight, 84 to 89% by weight, or 84 to 87% by weight, based on the total weight (a+b+c) of the acrylic resin (a), the tackifying resin (b), and the inorganic filler (c). As the content of the inorganic filler is within the above range, the thermally conductive acrylic sheet may have high adhesive strength while securing thermal conductivity and mechanical strength of the thermally conductive acrylic sheet.

### (d) Photoinitiator

The photoinitiator according to an embodiment of the present invention initiates a polymerization reaction of the acrylic resin (a) by generating a radical by light. The photoinitiator is not particularly limited as long as it is commonly known. Specifically, it may be at least one selected from the group consisting of peroxide-based compounds, oxime ester-based compounds, benzoin-based compounds, acetophenone-based compounds, benzophenone-based compounds, ketone-based compounds, quinone-based compounds, phosphine-based compounds, and triazine-based compounds.

The content of the photoinitiator may be 0.05 to 3 parts by weight, 0.1 to 1.5 parts by weight, 0.2 to 0.5 parts by weight, or 0.25 to 0.3 parts by weight, relative to the total weight (a+b+c=100 parts by weight) of the acrylic resin (a), the tackifying resin (b), and the inorganic filler (c). As the content of the photoinitiator is within the above range, it is possible to prevent the photoinitiator from being used in excess while the polymerization reaction is carried out smoothly.

### (e) Anti-settling agent

The thermally conductive acrylic composition according to an embodiment of the present invention may further comprise an anti-settling agent. The anti-settling agent adjusts the viscosity of the dispersion in which the acrylic resin (a), the tackifying resin (b), and the inorganic filler (c) have been mixed and prevents the caking phenomenon from taking place.

The anti-settling agent may be a particulate anti-settling agent capable of effectively preventing sedimentation of the dispersion while minimizing the loss of polar groups of the acrylic resin. Specifically, the anti-settling agent may be plate-shaped bentonite-based particles (e.g., montmorillonite) or spherical silica-based particles.

The content of the anti-settling agent may be 0.2 to 0.7 parts by weight, 0.25 to 0.6 parts by weight, 0.25 to 0.5 parts by weight, or 0.3 to 0.4 parts by weight, relative to the total weight (a+b+c=100 parts by weight) of the acrylic resin (a), the tackifying resin (b), and the inorganic filler (c). As the content of the anti-settling agent is within the above range, it is possible to control the viscosity of the dispersion not to be excessively high while preventing the caking phenomenon of the dispersion in which the acrylic resin (a), the tackifying resin (b), and the inorganic filler (c) have been mixed.

The thermally conductive acrylic sheet according to an embodiment of the present invention, which is prepared from the thermally conductive acrylic composition comprising the components described above, may have high adhesive strength, that is, an adhesive strength of 1 kgf/cm or more. Specifically, the thermally conductive acrylic sheet may have an adhesive strength of 1 to 2 kgf/cm, 1.01 to 1.9 kgf/cm, 1.01 to 1.8 kgf/cm, or 1.1 to 1.7 kgf/cm. Adhesive strength may be measured according to ASTM D903 under the following evaluation conditions.

* Evaluation conditions: a 2-kg rubber roll was reciprocated 5 times, it was left at room temperature for 3 hours, and the adhesive strength was measured (peel speed 300 mm/minute)

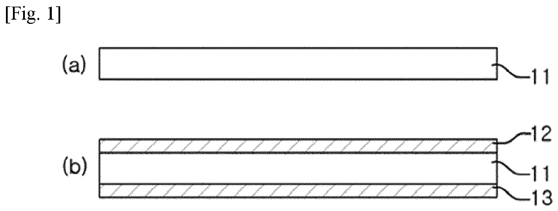

As the thermally conductive acrylic sheet has such high adhesive strength, it can be used as a thermal interface material in various fields even though it has a single-layer structure composed of a thermally conductive acrylic sheet layer (11) prepared from the thermally conductive acrylic composition described above as shown in Fig. 1(a). In order to protect its surface during the commercialization process, such a thermally conductive acrylic sheet may have a structure in which release layers (12 and 13) are combined on both sides of the thermally conductive acrylic sheet layer (11), respectively, as shown in Fig. 1(b).

Meanwhile, the thermally conductive acrylic sheet according to an embodiment of the present invention may exhibit excellent heat dissipation characteristics as well as high adhesive strength as it exhibits phase change thermal interface material characteristics. That is, when heat is generated in a device of the optical, electrical, or electronic field to which the thermally conductive acrylic sheet according to an embodiment of the present invention has been applied, the thermally conductive acrylic sheet absorbs heat (energy) generated in the device while a phase transition takes place, thereby enhancing the heat dissipation performance of the device.

Specifically, the thermally conductive acrylic sheet shows one endothermic peak, the temperature showing the endothermic peak being 95 to 105°C, in the first differential scanning calorimetry (DSC) curve obtained when the temperature is raised from -100°C to 300°C at a temperature elevation rate of 20°C/minute by DSC, which enables phase change thermal interface material characteristics. DSC may be measured using a differential scanning calorimeter, for example a DSC Q 10 V8.1 Build 261a.

In addition, the thermally conductive acrylic sheet according to an embodiment of the present invention may have a thermal conductivity as high as 1.5 W/mK or more, specifically 1.5 to 1.8 W/mK. Thermal conductivity may be measured in accordance with ASTM D5470.

As described above, since the thermally conductive acrylic sheet according to an embodiment of the present invention exhibits high adhesive strength while having excellent thermal conductivity and elastic restoring force, it can be advantageously applied to enhance the heat dissipation performance of devices in the optical, electrical, and electronic fields.

Elastic restoring force (compressive force) may be measured in accordance with ASTM D395.

### Process for preparing a thermally conductive acrylic sheet

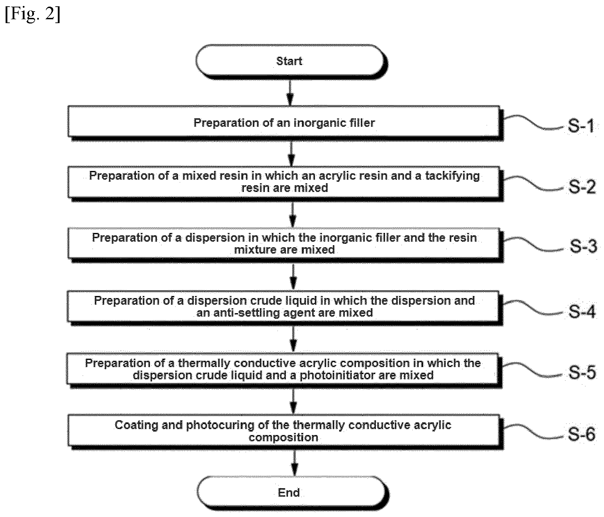

The process for preparing a thermally conductive acrylic sheet according to an embodiment of the present invention comprises coating an inorganic filler raw material with a silane coupling agent and pulverizing it to prepare an inorganic filler (S-1); preparing a resin mixture in which an acrylic resin and a tackifying resin are mixed (S-2); mixing the inorganic filler and the resin mixture to prepare a dispersion (S-3); mixing an anti-settling agent with the dispersion to prepare a dispersion crude liquid (S-4); mixing a photoinitiator with the dispersion crude liquid to prepare a thermally conductive acrylic composition (S-5); and coating the thermally conductive acrylic composition on a release film and photocuring it (S-6), which will be described in detail with reference to Fig. 2, as follows.

In step S-1, an inorganic filler raw material is coated (surface-modified) with a silane coupling agent, which is then pulverized.

The inorganic filler raw material may be a powder comprising at least one selected from the group consisting of magnesium oxide, aluminum oxide, aluminum nitride, boron nitride, silicon carbide, magnesium carbonate, and silicon dioxide. The powder may have an average particle diameter (D₅₀) of 1 to 80 µm, 3 to 60 µm, or 5 to 50 µm, in light of the thermal conductivity and process efficiency of the thermally conductive acrylic sheet. In addition, in order for the inorganic filler to be uniformly distributed in the thermally conductive acrylic sheet, a powder mixture in which a powder having an average particle size of 1 to 40 µm (specifically, 1 to 30 µm, 2 to 20 µm, or 3 to 10 µm) and a powder having an average particle size of greater than 40 to 80 µm (specifically, 41 to 70 µm, 42 to 60 µm, or 43 to 50 µm) have been mixed may be used. Therefore, the inorganic filler may be a mixture in which an inorganic filler (first inorganic filler) having an average particle size of 1 to 40 µm (specifically, 1 to 30 µm, 2 to 20 µm, or 3 to 10 µm) and an inorganic filler (second inorganic filler) having an average particle size of greater than 40 to 80 µm (specifically, 41 to 70 µm, 42 to 60 µm, or 43 to 50 µm) have been mixed. The terms "average particle diameter" and "average particle size" herein refer to D₅₀, also known as the "median particle diameter" and "median particle size". Methods for measuring D₅₀ are well known in the art.

The method of coating the inorganic filler raw material with a silane coupling agent may be a dry coating method or a wet coating method commonly known.

Meanwhile, since an inorganic filler raw material coated with a silane coupling agent may be agglomerated between particles during the coating process of the silane coupling agent, the coated inorganic filler raw material may be introduced into a particle screen to be subjected to a screening process in order to solve this problem. Thereafter, the inorganic filler raw material that has been subjected to the screening process may be introduced into a pulverizer to be subjected to a pulverization process to prepare an inorganic filler having a controlled particle size.

In step S-2, an acrylic resin and a tackifying resin are mixed. Specifically, an acrylic resin and a tackifying resin are supplied to a container equipped with a stirrer, followed by stirring thereof for 20 to 30 hours to prepare a resin mixture.

In step S-3, the inorganic filler and the resin mixture are mixed. Specifically, the inorganic filler and the resin mixture thus prepared are supplied to a mixer, followed by stirring thereof to prepare a dispersion. The stirring may be carried out at 400 to 600 rpm for 20 to 60 minutes.

In step S-4, an anti-settling agent is mixed with the dispersion. Specifically, an anti-settling agent is supplied to the mixer in which the inorganic filler and the resin mixture have been supplied, followed by stirring thereof to prepare a dispersion crude liquid. Here, the amount of the anti-settling agent to be added may be appropriately adjusted according to the viscosity of the dispersion.

In step S-5, a photoinitiator is mixed with the dispersion crude liquid. Specifically, a photoinitiator is mixed with the dispersion crude liquid, followed by stirring thereof to prepare a thermally conductive acrylic composition. Here, the thermally conductive acrylic composition thus prepared may be subjected to a vacuum defoaming process.

In step S-6, the thermally conductive acrylic composition thus prepared is coated on a release film, which is then photocured. The method of coating the thermally conductive acrylic composition on a release film is not particularly limited. Specifically, dip coating, spin coating, bar coating, spray coating, or the like may be used. Specifically, the photocuring of the thermally conductive acrylic composition may be carried out for 5 to 30 minutes (specifically, 8 to 12 minutes) while irradiating ultraviolet light using a lamp such as a xenon lamp, a mercury lamp, or a metal halide lamp.

The thermally conductive acrylic sheet prepared through the above process can be cut into various sizes and shapes depending on the field of application. It is then used with the release film removed.

In the process for preparing a thermally conductive acrylic sheet according to an embodiment of the present invention, a solvent-free thermally conductive acrylic composition is used to prepare the thermally conductive acrylic sheet; thus, it is possible to readily prepare thermally conductive acrylic sheets having various thicknesses. Specifically, it is possible to prepare a thermally conductive acrylic sheet having a thickness of 0.25 mm or more, 0.25 to 300 mm, or 50 to 250 mm, according to the above preparation process.

### Battery module

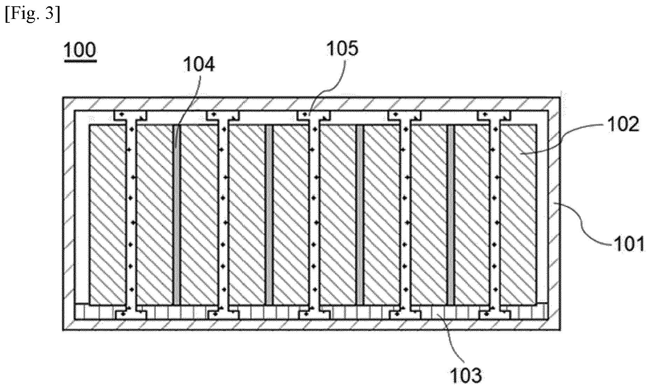

The battery module according to an embodiment of the present invention comprises a thermally conductive acrylic sheet, which will be described in detail with reference to Fig. 3, as follows.

The battery module (100) according to an embodiment of the present invention comprises a housing (101), a battery cell (102), and a thermally conductive acrylic sheet (103).

The housing (101) serves to protect and fix a plurality of battery cells (102). The housing (101) may be made of a metal such as aluminum or a synthetic resin such as a polycarbonate resin, a polypropylene resin, or an ABS resin.

The battery cell (102) is provided in plurality in the housing (101) in which they are arranged in parallel to produce or store energy. Such a battery cell (102) may comprise a positive electrode, a negative electrode, an electrolyte, and the like commonly known. A cushioning pad (104) capable of preventing impact may be provided between each of the plurality of battery cells (102). In addition, a cooling fin (105) for cooling heat generated while the battery cell (102) is operated may be provided between each of the plurality of battery cells (102).

The thermally conductive acrylic sheet (103) serves to release heat generated in the battery module (100) to the outside. Since the thermally conductive acrylic sheet (103) is prepared from the thermally conductive acrylic composition, which comprises the acrylic resin, tackifying resin, inorganic filler, and photoinitiator described above, it may be strongly coupled (attached) to the battery module (100) while smoothly releasing heat generated from the battery module (100) to the outside.

In particular, the thermally conductive acrylic sheet (103) may be positioned at the lower end inside the battery module (e.g., the lower end of the battery cell (102)) as shown in Fig. 3 to enhance the heat dissipation characteristics of the battery module (100). Specifically, since the thermally conductive acrylic sheet (103) has a high adhesive strength of 1 kgf/cm or more, it can perform a heat dissipation function as it is stably attached to the lower end of the battery cell (102). In addition, the thermally conductive acrylic sheet (103) can also serve as an adhesive for bonding an additional heat-dissipating material (e.g., a heat sink) to the battery module (100), thereby maximizing the heat-dissipation efficiency of the battery module (100).

The battery module (100) according to an embodiment of the present invention can be used in various fields. In particular, it can be used in electric vehicles, where the reliability and stability of the battery system take a large part.

### Mode for the Invention

The present invention will be described in more detail with reference to the following examples. But the following Examples are intended to further illustrate the present embodiment without limiting its scope.

### [Example 1]

An inorganic filler was prepared based on the Horsefield Peking theory. Specifically, spherical alumina (Denkaum) powders having a particle size (D₅₀) of 45 µm and 5 µm, respectively, were mixed in a Hansel mixer, spray-coated with a silane coupling agent (KM403), and dried. Then, the particles agglomerated during the coating of the silane coupling agent and the drying process were screened through a particle screen and then pulverized through a jet mill to prepare an inorganic filler composed of spherical particles.

Meanwhile, an acrylic resin (3-A, Samhwa) and a hydrogenated rosin ester as a tackifying resin were mixed and stirred for one day to prepare a resin mixture.

Then, the inorganic filler and the resin mixture were mixed to prepare a dispersion. In such an event, the contents (amounts used) of the inorganic filler, the acrylic resin, and the tackifying resin were adjusted as shown in Table 1 (unit: % by weight) below.

Then, an anti-settling agent (Clayton HY, BYK) was added to the dispersion, which was then stirred at 500 rpm for 30 minutes with a planetary mixer to prepare a dispersion crude liquid. In such an event, the content (amount used) of the anti-settling agent was 0.3 part by weight relative to 100 parts by weight of the dispersion in which the inorganic filler, the acrylic resin, and the tackifying resin (hydrogenated rosin ester) had been mixed.

Then, a photoinitiator was added to the dispersion crude liquid, followed by stirring and vacuum defoaming thereof to prepare a thermally conductive acrylic composition. In such an event, the content (amount used) of the photoinitiator was 0.275 part by weight relative to 100 parts by weight of the dispersion in which the inorganic filler, the acrylic resin, and the tackifying resin (hydrogenated rosin ester) had been mixed.

Thereafter, the thermally conductive acrylic composition thus prepared was coated by a dip coating method between double-sided silicone-based release films and photocured for 10 minutes while irradiated with 40 W low-pressure UV to prepare a thermally conductive acrylic sheet (thickness: 0.25 mm).

### [Examples 2 to 6]

A thermally conductive acrylic sheet was prepared through the same procedure as in Example 1, except that the composition of the dispersion in which the inorganic filler, acrylic resin, and tackifying resin (hydrogenated rosin ester) had been mixed was adjusted as shown in Table 1 below.

**[Table 1]**

| | Ex. 1 | Ex. 2 | Ex. 3 | Ex. 4 | Ex. 5 | Ex. 6 |
|---|---|---|---|---|---|---|
| Inorganic filler (spherical alumina particles) | 84 | 84 | 84 | 84 | 84 | 84 |
| Acrylic resin (3-A, Samhwa) | 14.4 | 14.4 | 13.44 | 12.8 | 13.28 | 13.28 |
| Tackifying resin (Eastman, acid value 14 mg KOH/g, softening point 101°C) | 1.6 | - | 1.12 | 1.6 | 1.12 | 1.6 |
| Tackifying resin | - | 1.6 | 1.44 | 1.6 | 1.6 | 1.12 |
| (Arakawa, acid value 2-10 mg KOH/g, softening point 90-100°C) | | | | | | |
| Total (% by weight) | 100 | 100 | 100 | 100 | 100 | 100 |

### [Comparative Examples 1 and 2]

A thermally conductive acrylic sheet was prepared through the same procedure as in Example 1, except that the composition of the dispersion in which the inorganic filler and acrylic resin (without the tackifying resin) had been mixed was adjusted as shown in Table 2 below.

**[Table 2]**

| | C. Ex. 1 | C. Ex. 2 |
|---|---|---|
| Inorganic filler (spherical alumina particles) not surface-modified (coated) with a silane coupling agent | - | 84 |
| Inorganic filler (spherical alumina particles) surface-modified (coated) with a silane coupling agent | 84 | - |
| Acrylic resin (3-A, Samhwa) | 16 | 16 |
| Total (% by weight) | 100 | 100 |

### [Test Example 1]

The thermally conductive acrylic sheets (width: 10 mm, length: about 180 mm) prepared in the Examples and Comparative Examples were each fixed with a steel welding tape (Duksung Hi-Tek cloth tape). Then, its adhesive strength was measured according to ASTM D903 under the following evaluation conditions. The results are shown in Table 3 below.

* Evaluation conditions: a 2-kg rubber roll was reciprocated 5 times, it was left at room temperature for 3 hours, and the adhesive strength was measured (peel speed 300 mm/minute)

### [Test Example 2]

The thermally conductive acrylic sheets prepared in the Examples and Comparative Examples were each measured for the thermal conductivity in accordance with ASTM D5470. The results are shown in Table 3 below.

### [Test Example 3]

The thermally conductive acrylic sheets prepared in the Examples and Comparative Examples were each measured for the compressive force (elastic restoring force) in accordance with ASTM D395. The results are shown in Table 3 below.

**[Table 3]**

| | Adhesive strength (kgf/cm) | Thermal conductivity (W/mK) | Compressive force (%) |
|---|---|---|---|
| Ex. 1 | 1.01 | 1.6 | 22 |
| Ex. 2 | 1.1 | 1.6 | 22 |
| Ex. 3 | 1.1 | 1.6 | 22 |
| Ex. 4 | 1.1 | 1.6 | 22 |
| Ex. 5 | 1.7 | 1.6 | 22 |
| Ex. 6 | 1.3 | 1.6 | 22 |
| C. Ex. 1 | 0.4 | 1.6 | 22 |
| C. Ex. 2 | 0.3 | 1.6 | 22 |

Referring to Table 3, in Examples 1 to 6 in which a tackifying resin (comprising a hydrogenated rosin ester) was added to a thermally conductive acrylic composition for preparing a thermally conductive acrylic sheet, the thermal conductivity and compressive force were at the required levels, and the adhesive strength was significantly high, as compared with Comparative Examples 1 and 2 in which a tackifying resin was not added.

### [Test Example 4]

Differential scanning calorimetry (DSC Q 10 V8.1 Build 261) was carried out while the thermally conductive acrylic sheet prepared in Example 5 was heated at a temperature elevation rate of 20°C/minute.

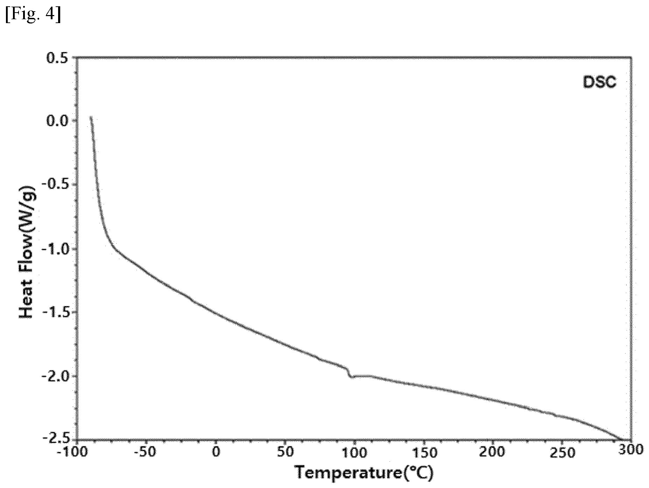

Referring to Fig. 4, one endothermic peak was observed to appear near about 100°C. This result is understood to support the preparation of a thermally conductive acrylic sheet exhibiting phase change thermal interface material characteristics as a thermally conductive acrylic sheet was prepared using a thermally conductive acrylic composition employing a tackifying resin.

## Claims

1. A thermally conductive acrylic sheet, which is prepared from a thermally conductive acrylic composition comprising an acrylic resin, a tackifying resin, an inorganic filler, and a photoinitiator, wherein the tackifying resin comprises a hydrogenated rosin ester, and the adhesive strength of the thermally conductive acrylic sheet is 1 kgf/cm or more.

2. The thermally conductive acrylic sheet of claim 1, wherein the hydrogenated rosin ester comprises a compound having no unsaturated bond, comprising two or more bonded 6-membered ring structures, and having one or more functional groups.

3. The thermally conductive acrylic sheet of claim 1 or claim 2, wherein the hydrogenated rosin ester has an acid value of 2 to 20 mg KOH/g and a softening point of 80 to 110°C.

4. The thermally conductive acrylic sheet of any preceding claim, wherein the hydrogenated rosin ester comprises a first hydrogenated rosin ester and a second hydrogenated rosin ester having an acid value different from that of the first hydrogenated rosin ester.

5. The thermally conductive acrylic sheet of claim 4, wherein the first hydrogenated rosin ester has an acid value of 2 to 10 mg KOH/g, and the second hydrogenated rosin ester has an acid value of 11 to 20 mg KOH/g.

6. The thermally conductive acrylic sheet of claim 4 or claim 5, wherein the mixing ratio of the first hydrogenated rosin ester and the second hydrogenated rosin ester is a weight ratio of 1:0.5 to 1:4.

7. The thermally conductive acrylic sheet of any preceding claim, wherein the content of the tackifying resin is 3 to 30% by weight based on the total weight of the acrylic resin and the tackifying resin.

8. The thermally conductive acrylic sheet of any preceding claim, wherein the content of the inorganic filler is 83% by weight or more based on the total weight of the acrylic resin, the tackifying resin, and the inorganic filler.

9. The thermally conductive acrylic sheet of any preceding claim, wherein the inorganic filler is surface-modified with a silane coupling agent.

10. The thermally conductive acrylic sheet of any preceding claim, wherein the inorganic filler is a mixture in which an inorganic filler having an average particle size of 1 to 40 µm and an inorganic filler having an average particle size of greater than 40 to 80 µm are mixed.

11. The thermally conductive acrylic sheet of any preceding claim, wherein the thermally conductive acrylic composition further comprises an anti-settling agent.

12. The thermally conductive acrylic sheet of any preceding claim, wherein the thermally conductive acrylic sheet shows one endothermic peak in the first differential scanning calorimetry (DSC) curve obtained when the temperature is raised from -100°C to 300°C at a temperature elevation rate of 20°C/minute by DSC, and the temperature showing the endothermic peak is 95 to 105°C.

13. A process for preparing a thermally conductive acrylic sheet, which comprises:
coating an inorganic filler raw material with a silane coupling agent and pulverizing it to prepare an inorganic filler;
preparing a resin mixture in which an acrylic resin and a tackifying resin are mixed;
mixing the inorganic filler and the resin mixture to prepare a dispersion;
mixing an anti-settling agent with the dispersion to prepare a dispersion crude liquid;
mixing a photoinitiator with the dispersion crude liquid to prepare a thermally conductive acrylic composition; and
coating the thermally conductive acrylic composition on a release film and photocuring it.

14. A battery module, which comprises a housing; a battery cell; and a thermally conductive acrylic sheet as claimed in any one of claims 1 to 12.

15. The battery module of claim 14, wherein the thermally conductive acrylic sheet is positioned at the lower end inside the battery module.
